Europäisches Patentamt

European Patent Office

Office européen des brevets

(19)

(11) Veröffentlichungsnummer : **0 330 946 B1**

(12) **EUROPÄISCHE PATENTSCHRIFT**

(45) Veröffentlichungstag der Patentschrift :
18.09.91 Patentblatt 91/38

(51) Int. Cl.⁵ : **F16L 23/04, F16L 21/06,**
**F16L 37/20**

(21) Anmeldenummer : **89102866.4**

(22) Anmeldetag : **20.02.89**

(54) **Klemmverbindungseinheit.**

(30) Priorität : **02.03.88 DE 3806630**

(43) Veröffentlichungstag der Anmeldung :
**06.09.89 Patentblatt 89/36**

(45) Bekanntmachung des Hinweises auf die
Patenterteilung :
**18.09.91 Patentblatt 91/38**

(84) Benannte Vertragsstaaten :
**DE FR GB IT**

(56) Entgegenhaltungen :
**DE-A- 2 819 921**
**DE-A- 3 240 582**
**DE-A- 3 328 137**

(73) Patentinhaber : **Agfa-Gevaert AG**
**W-5090 Leverkusen 1 (DE)**

(72) Erfinder : **Baarfüsser, Johann**
**Filchner Strasse 104**
**W-8000 München 71 (DE)**
Erfinder : **Beck, Clemens**
**Innsbrucker Strasse 88**
**W-8031 Gröbenzell (DE)**
Erfinder : **Ganz, Herbert**
**Schwaneckstrasse 2**
**W-8000 München 70 (DE)**
Erfinder : **Kuntz, Günther**
**Leoprechtingstrasse 40**
**W-8000 München 83 (DE)**

## Beschreibung ·

Die Erfindung betrifft eine Klemmverbindungseinheit zur lösbaren klemmenden Verbindung zweier zylindrischer Rohre gemäß dem Oberbegriff des Anspruchs 1.

Zum Verbinden von zwei axial hintereinander angeordneten Rohren oder Gehäuseteilen werden bisher die Stoßstelle überbrückende Rohrabschnitte in Form von auf die Rohre aufgeschobenen Muffen, Flanschen oder in die Rohre eingreifenden Zapfen verwendet. Diese bekannten Anordnungen sind nicht nur sehr aufwendig, sondern auch nicht universell verwendbar genug, beispielsweise dann, wenn unter Druck Flüssigkeiten durch die Rohre durchgepumpt werden.

Durch Schraubmuttern oder Spannschrauben verbundene Rohre sind aus der DE-A-3249120 und dem DE-U-8437061 bekannt, eine Steckverbindung mit Rolldichtringen ist in der EP-A-0134448 beschrieben und eine weitere gewindelose Verbindung von Rohren ist aus der DE-A-2311458 bekannt.

Die DE-A-3240582 beschreibt eine Klemmverbindung, welche an einem Rohr am Rohrende außen angeformt ist und stirnseitig eine umlaufende Aufnahme für ein elastisches Dichtmittel aufweist und unter Vorspannen des Dichtmittels gegen einen stirnseitig gleichartig ausgebildeten Gegenflansch anlegbar ist, wobei die Flansche durch Befestigungsmittel gegeneinander preßbar sind. Dabei weist die Stirnseite des Flansches in einem Abstand radial innerhalb der Aufnahme eine umlaufende Aussparung auf, die im Übergangsbereich von der Rohrwand zum Flansch eine Sollbiegestelle mit reduzierter Wandstärke bildet, wobei gleichzeitig diese Aussparung einen Totraum an der Rohrinnenseite der Verbindungsstelle bildet.

Die DE-A-2819921 weist nicht diesen Nachteil auf, indem bei der in dieser Veröffentlichung beschriebenen Klemmverbindung der Innendurchmesser des Dichtungskörpers dem Innendurchmesser der Rohre entspricht, so daß beim Zusammenklemmen eine spaltfreie Verbindung der beiden Rohre entsteht.

Wie bereits erwähnt, besteht häufig die Aufgabe, bei Fabrikationsprozessen beispielsweise in der chemischen Industrie oder beim Transport von Nahrungsmitteln unter Druck Flüssigkeiten durch Rohrleitungen zu pumpen. Gleichzeitig soll zwecks Reinigungs- oder Umbauarbeiten die Rohrverbindung leicht zerlegbar sein, ferner soll bei bestehenden Rohrleitungen eine effektive sogenannte Molchreinigung gewährleistet sein, etwa durch durchgepresste Pfropfen, Bürsten oder Schaber. Beim Durchleiten von Flüssigkeiten etwa Dispersionen, die aggressive Lösungsmittel enthalten, beispielsweise magnetischer Dispersionen, soll die Flanschverbindung der Rohrleitungen unbedingt dicht sein, um das Dichtungsmaterial nicht anzugreifen, außerdem sollen Toträume an den Flanschverbindungen vermieden werden, da sich sonst an diesen Stellen Ablagerungen oder Zersetzungsprodukte bilden, welche zu Fabrikationsstörungen etwa Zusetzen von Filtern, Anlaß geben.

Daher bestand die Aufgabe, eine Klemmverbindungseinheit der eingangs genannten gattungsmäßigen Art zu finden, die totraumfrei ist, die angeführten Nachteile vermeidet und dabei einfach zusammenzufügen und zu zerlegen ist.

Erfindungsgemäß wurde die Aufgabe gelöst mit einer Klemmverbindungseinheit mit den im kennzeichnenden Teil des Anspruchs 1 genannten Merkmalen. Weitere Einzelheiten der Erfindung gehen aus den Unteransprüchen, der Beschreibung und den Zeichnungen hervor.

Die Erfindung wird nun anhand der Zeichnungen näher erläutert und zwar zeigt

Figur 1    einen Schnitt durch eine Kupplungswandung mit der erfindungsgemäßen Klemmverbindungseinheit und mit aufgesteckten Rohrenden

Figur 2    eine perspektivische Darstellung einer handelsüblichen Ausführungsform der Klemmverbindung

Figur 3    eine andere Ausführungsform einer Klemmverbindungseinheit

Charakteristisch für die vorliegende Erfindung ist, daß die beiden an den Rohrenden angebrachten Kupplungshälften (1, 2) identisch aufgebaut sind. Wie die Schnittfigur 1 zeigt, besitzt jede Kupplungswandung zwischen der Innenseite (3, 4) und der Außenseite (5, 6) an der an sonsten glatten Endfläche eine kreiszylindrische Ringnut (17, 18), welche in axialer Richtung V-förmig ausgeprägt ist, so daß zwischen den beiden Kupplungshälften beziehungsweise Rohrenden ein ringförmiger Spalt mit rechteckigem Querschnitt entsteht, wobei jedoch die Kanten in der Kupplungshälftenmitte abgerundet sein können. In diesem Spalt wird ein O-Ring (16) als Dichtring eingesteckt. In entsprechend kreiszylindrisch ausgeprägte Ausnehmungen der Innenseite der Kupplungshälften sind die Rohrenden (23, 24) hineingepaßt, wobei die Durchmesser der Rohre und der aneinanderstoßenden Innenflächen der Kupplungshälften identisch sind, so daß die entsprechenden Innenwandungen stoßfrei aneinandergrenzen.

Des weiteren besitzen die Kupplungshälften an der Rohraußenseite jeweils ringförmige Höcker (7, 8), deren einander zugekehrte Flächen (9, 10) radial verlaufen und deren von einander abgekehrte Flächen (11, 12) abgeschrägt sind.

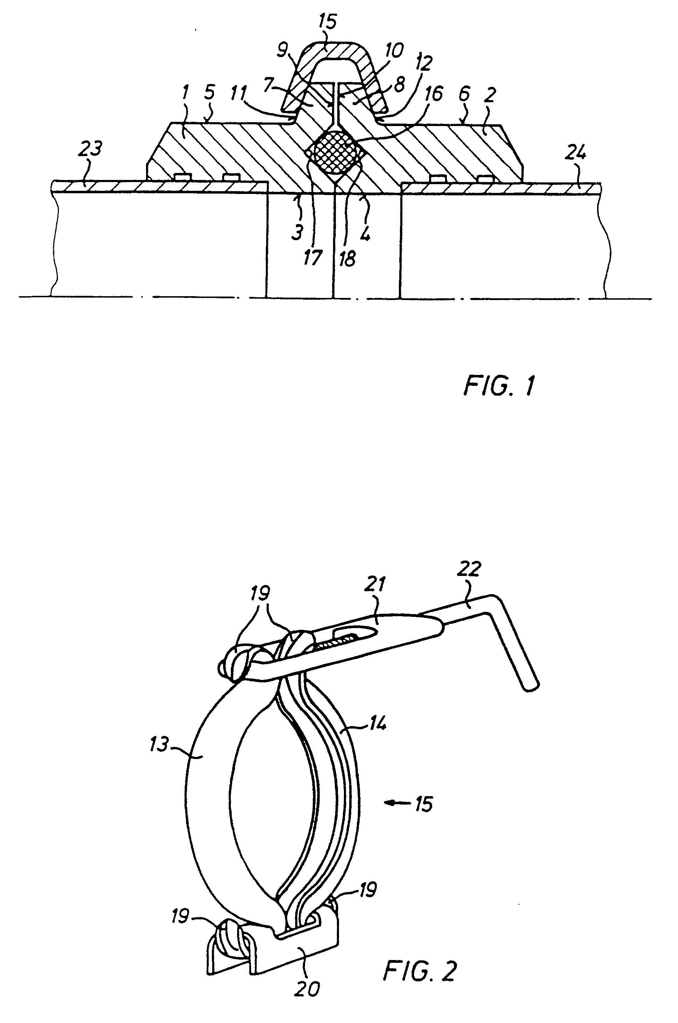

Die Klemmverbindung wird durch eine handelsübliche Rohrschelle (15) gemäß Figur 2 bewirkt. Eine solche Rohrschelle ist beispielsweise in der DE-A-3328137 beschrieben. Sie besteht in einer bevorzugten Ausführungsform aus zwei halbringförmigen Klemmbacken (13, 14), deren Innenseiten V-förmig abgeschrägt und der Schräge der Höckerflächen (11, 12) angepaßt sind. Dabei sind die jeweiligen Enden der Backenhalbringe in der Form eines Hakens (19) oder einer Öse gekrümmt und werden durch Gelenkklammern (20, 21) zusammengehalten. Vorzugsweise eine der Gelenkklammern enthält an einem Ende eine Bohrung mit Schraubgewinde, durch die eine Schraube (22) eingedreht gegen das gekrümmte Ende (19) drückt und so die Klemmverbindung bewirkt. Beim Zusammenklemmen gleiten die Innenflächen der Klemmbacken (13, 14) an den Höckerflächen (11, 12) in radialer Richtung entlang. Durch diesen Aufbau werden die Kupplungshälften (1, 2) gegen die Kraft des elastischen Ringes (16) zusammengepreßt, bis die Kupplungshälften an der Kupplungsinnenseite abstandslos aufeinanderliegen. Die radial verlaufenden Flächen (9, 10) der Höcker (7, 8) weisen dann im zusammengepreßten Zustand der Klemmverbindungseinheit noch einen geringfügigen Abstand auf.

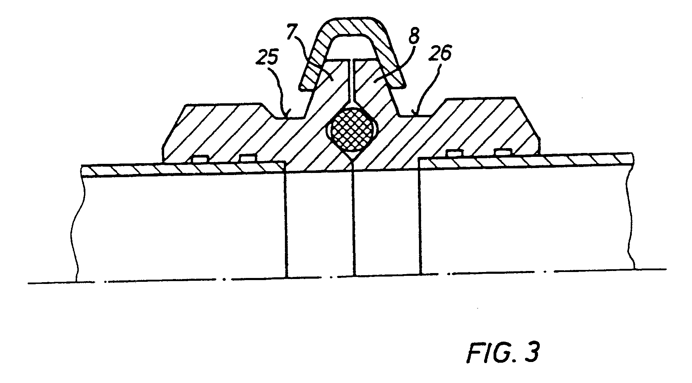

Selbstverständlich kann die geschilderte bevorzugte Ausführung der Rohrschelle auch abgewandelt werden, ohne den Geist der Erfindung zu verlassen. Beispielsweise können sich bei beiden Kupplungshälften ausgehend von den Höckern (7, 8) in axialer Richtung wannenförmige Vertiefungen (25, 26) anschließen, in die die Enden der Klemmbacken beim Zusammenpressen eintauchen, wie in Figur 3 dargestellt.

Erfindungswesentlich für das leichte Zusammenpressen ist, daß die Innenflächen der Klemmbacken V-förmig abgeschrägt und der Abschrägung der Höckerflächen angepaßt sind, um auf diese Weise auf der gesamten Ringfläche der Höcker ein gleichmäßiges Zusammenpressen der Kupplungshälften zu erzielen.

Die Vorteile der erfindungsgemäßen Klemmverbindungseinheit lassen sich wie folgt zusammenfassen :
— Verwendet werden zwei identische Kupplungshälften, daher wird Teilevielfalt vermieden
— die Zentrierung der beiden Kupplungshälften geschieht über einen Dicht-Ring durch spezielle Dicht-Ring-Nut in doppelter V-Form
— die metallischen Dichtflächen liegen nur an der Kupplungsinnenseite, durch welche die zu transportierende Flüssigkeit strömt, aneinander, so daß kein elastisches Dichtmaterial direkt mit der Flüssigkeit in Kontakt kommt
— durch spaltfreie Abdichtung der innenliegenden Metallflächen geschieht eine totraumfreie Verschraubung
— ein gewaltsames Zusammenzwingen der Kupplungshälften und damit ein Verspannen der Rohrleitungen ist nicht möglich
— der Innendruck der durchströmenden Flüssigkeit wirkt nicht auf die Schraubverbindung, sondern lediglich auf die V-förmige Klammer
— die Klemmverbindungseinheit ist durch ihre besondere Formgebung leicht zu reinigen
— durch Trennung der Dichtsektoren (Flüssigkeit-Metall-elastische Dichtung) können auch Dichtungen verwendet werden, die gegen die durch die Kupplung strömende Flüssigkeit unbeständig sind
— die Dichtung kann bei Unterdruck und Überdruck eingesetzt werden.

## Patentansprüche

1. Klemmverbindungseinheit zur lösbaren klemmenden Verbindung zweier hohlzylindrischer Rohre, bestehend aus zwei identischen aneinandergrenzenden Kupplungshälften am jeweiligen Rohrende, welche stirnseitig eine umlaufende aufweisen, die einen elastischen Dichtring enthalten und wobei die beiden Kupplungshälften mit Hilfe einer Klemmverbindung zusammenpreßbar ist, wobei an der Kupplungsaußenseite angeformte ringförmige Höcker (7, 8) angeordnet sind, deren voneinander abgewandte Flächen (11, 12) abgeschrägt sind und an welchen unter gleichem Winkel die abgeschrägten Innenseiten der Backen (13, 14) einer Klemmverbindung (15) in radialer Richtung gleitend angreifen, dadurch gekennzeichnet, daß die umlaufende Aufnahme (17, 18) in axialer Richtung V-förmig ausgeprägt ist, so daß zwischen den beiden Kupplungshälften ein ringförmiger Spalt mit annähernd rechteckigem Querschnitt ausgeprägt ist und wobei im zusammengepreßten Zustand die Stirnseiten der Kupplungshälften außerhalb des Spalts einen geringfügigen Abstand aufweisen, während sie innerhalb des Spalts abstandslos aneinanderliegen.

2. Klemmverbindungseinheit nach dem Anspruch 1, dadurch gekennzeichnet, daß die Klemmverbindung (15) eine mehrteilige Rohrschelle ist, welche aus zwei auf der Innenseite V-förmig ausgeprägten halbringförmigen Backen (13, 14) besteht, welche an beiden Enden jeweils Haken (19) oder Ösen zum Einhängen von Gelenkklammern (20, 21) besitzen, welche die Klemmbacken miteinander verbinden, und wobei mindestens eine Gelenkklammer an einem Ende eine Bohrung mit Schraubgewinde enthält, durch welche eine Schraube (22) durchgeführt ist, deren Ende an einem Haken (19) einer Backe (14) angreift, wobei die Klemmbacken die Kupplungsenden durch Aufschieben auf die abgeschrägten Flächen der Höcker zusammenpressen.

3. Klemmverbindungseinheit nach Anspruch 1 oder 2, dadurch gekennzeichnet, daß sich an der Außenseite beider Kupplungshälften in axialer Richtung ausgehend von den Hökkern (7, 8) wannenförmige Vertiefungen (25, 26) anschließen.

## Claims

1. Clamping connection unit for detachably clamping together two hollow cylindrical pipes, comprising two identical adjoining coupling halves on each pipe end which have on their face a circumferential seat containing an elastic sealing ring, and with the two coupling halves being pressable together by means of a clamping connection, with there being disposed, formed on the coupling exterior, annular protuberances (7, 8), whose surfaces (11, 12) remote from one another are bevelled and upon which at the same angle the bevelled inner sides of the jaws (13, 14) of a clamping connection (15) act slidingly in a radial direction, characterised in that the circumferential seat (17, 18) has a defined V shape in an axial direction, with the result that an annular gap having an approximately rectangular cross-section is defined between the two coupling halves and, in the compressed state, the faces of the coupling halves outside of the gap have a slight clearance while inside of the gap they are tightly fitted together.

2. Clamping connection unit according to claim 1, characterised in that the clamping connection (15) is a multipart pipe clip comprising two semi-circular jaws (13, 14), which are defined in a V shape on their inner side and have at both ends hooks (19) or eyes for securing articulated clamps (20, 21) which join the clamping jaws to one another, with at least one articulated clamp having at one end a bore with a screw thread through which is passed a screw (22) whose end acts upon a hook (19) of a jaw (14), with the clamping jaws sliding onto the bevelled surfaces of the protuberances and thereby pressing the coupling ends together.

3. Clamping connection unit according to claim 1 or 2, characterised in that trough-like recesses (25, 26) emanating in an axial direction from the protuberances (7, 8) adjoin the exterior of both coupling halves.

## Revendications

1. Unité de raccordement à serrage destinée à établir un raccordement à serrage démontable entre deux tubes à cavité cylindrique, composée de deux demi-raccords identiques, adjacents entre eux, prévus sur les extrémités correspondantes des tubes et qui présentent, sur la face frontale, un logement circonférentiel qui renferme une bague d'étanchéité élastique, unité dans laquelle les demi-raccords peuvent être pressés l'un contre l'autre à l'aide d'un dispositif d'assemblage à serrage, et où il est prévu des protubérances annulaires (7, 8) formées sur la surface externe du raccord, et dont les surfaces (11, 12) qui sont éloignées l'une de l'autre sont inclinées, et que les faces internes inclinées des mâchoires (13, 14) d'un dispositif d'assemblage à serrage (15) attaquent en glissant dans la direction radiale, caractérisée en ce que le logement circonférentiel (17, 18) est en forme de V dans la direction axiale, de sorte qu'il se forme entre les deux demi-raccords une fente annulaire possédant une section à peu près rectangulaire, cependant que, dans l'état pressé, les faces frontales des demi-raccords sont légèrement espacées l'une de l'autre en dehors de la fente tandis qu'à l'intérieur de la fente, elles sont en appui l'une contre l'autre, sans espace libre.

2. Unité de raccordement à serrage selon la revendication 1, caractérisée en ce que le dispositif d'assemblage à serrage (15) est fait d'un collier de tube en plusieurs pièces, qui est composé de deux mâchoires (13, 14) présentant la forme de demi-anneaux, qui sont façonnées en forme de V sur la face interne et qui présentent, aux deux extrémités, des crochets (19) ou des boucles dans lesquelles on peut accrocher des organes de serrage à articulation (20, 21) qui relient les mâchoires de serrage l'une à l'autre, au moins un organe de serrage à articulation présentant à une extrémité un perçage renfermant un filetage et à travers lequel est vissée une vis (22) dont l'extrémité attaque un crochet (19) d'une mâchoire (14), les mâchoires de serrage pressant les extrémités des raccords l'une contre l'autre en s'emboîtant sur les surfaces inclinées des protubérances.

3. Unité de raccordement à serrage selon la revendication 1 ou 2, caractérisée en ce que des évidements (25, 26) à profil de cuvette sont prévus dans la surface externe des deux demi-raccords, à la suite des protubérances (7, 8), dans le sens qui s'en éloigne axialement.

FIG. 1

FIG. 2

FIG. 3